# EUROPEAN PATENT APPLICATION

(11) **EP 4 550 636 A1**
(43) Date of publication of application: **07.05.2025**
(21) Application number: 22949100.6
(22) Date of filing: 29.11.2022
(51) Int. Cl.: H02K 3/28

(54) **STATOR WINDING CONNECTOR, STATOR WINDING AND ELECTRIC MOTOR**

(30) Priority: 30.06.2022 CN 202210770659
(71) Applicant: United Automotive Electronic Systems Co., Ltd., Pudong New Area Shanghai 201206 (CN)
(72) Inventor: HAO, Xiufeng, Shanghai 201206 (CN); YU, Xingxiang, Shanghai 201206 (CN); JIANG, Daqian, Shanghai 201206 (CN); ZHU, Siheng, Shanghai 201206 (CN)
(74) Representative: Murgitroyd & Company
(86) International application number: PCT/CN2022/134929
(87) International publication number: WO 2024/001020

(57) **Abstract**

The present invention provides a stator winding connector, a stator winding and an electric motor. The stator winding connector is adapted to be provided on a conductor in a winding and includes a connector body defining, on its opposite sides, a connecting surface and a first avoidance surface. The first avoidance surface is configured so that, when a single conductor group including first and second conductors both provided with such connectors is mounted in a stator slot of a stator at relatively fixed positions, the connector body of any of the conductors does not protrude beyond an insulating layer on the other conductor. Adding the first avoidance surfaces on the side opposite to the connecting surfaces enables avoidance of interference, and an increased clearance, between the adjacent conductors in the conductor group, which allows the winding to satisfy a creepage distance requirement of an electric motor. Moreover, since the first avoidance surfaces enable avoidance of interference of each conductor with the insulating layer on the adjacent conductor, during bending and twisting of the conductors at the connecting end portions, any conductor will not come into contact with the insulating layer on the adjacent conductor, avoiding causing damage to the insulating layers.

## Description

### TECHNICAL FIELD

The present invention relates to the field of electric motors, and more particularly to a stator winding connector, a stator winding and an electric motor.

### BACKGROUND

Drive motors of electric vehicles (EVs) are one of the most crucial components in their gear systems because their service life and reliability are directly related to the life and safety of the vehicles. Therefore, for the development of such electric motors, the reliability and compactness of winding designs are particularly important. Currently, most EVs employ flat wire motors because of a high slot fill factor and high power density that these motors can provide.

Stator windings in most existing flat wire motors are categorized into hairpin and I-pin ones. A hairpin winding is made up of conductor groups, each of which is a U-shaped integral structure resembling a hairpin and formed by bending and twisting a conductor. Hairpin windings suffer from difficult insertion of conductors into stator slots, which slows down the manufacturing process. In contrast, each conductor group in an I-pin winding includes a first conductor and a second conductor, which are separate from each other before they are inserted into a stator slot. The first and second conductors may be separately inserted into the stator slot and then connected together end-to-end. Therefore, conductors in I-pin windings can be more easily inserted into stator slots, enabling faster manufacturing.

However, after the first and second conductors in existing I-pin windings are connected at their connecting ends, there tend to be a too small clearance and hence an inadequate creepage distance between the adjacent conductors. Moreover, the connecting ends tend to excessively raise the ends of the conductors.

### SUMMARY

It is an objective of the present invention to provide a stator winding connector, a stator winding and an electric motor. The connecting end portion is a modified conductor end portion, which increases a clearance between adjacent conductors in a conductor group to enable a winding to have a creepage distance required by an electric motor.

The stator winding connector overcomes the problem of an inadequate creepage distance between connected conductors in existing windings.

The stator winding connector is adapted to be provided on a conductor in a winding and includes a connector body defining, on its opposite sides, a connecting surface and a first avoidance surface, the first avoidance surface configured so that, when a single conductor group including first and second conductors both provided with such connectors is mounted in a stator slot of a stator at relatively fixed positions, the connector body of any of the conductors does not protrude beyond an insulating layer on the other conductor.

Additionally, the connector body may further define a first side wall surface and a second avoidance surface in the first side wall surface, the second avoidance surface configured so that
when the first and second conductors are mounted in the stator slot at the relatively fixed positions, the first side wall surface of the connector body of the first conductor radially opposes the first side wall surface of the connector body of the second conductor and that the first side wall surface of the connector body of each of the conductors is spaced, on a side proximal to a free end of the connector, from the other conductor by a radial gap in a radial direction of the stator.

Additionally, the connector body may further have an end surface at the free end thereof, wherein the second avoidance surface is joined to the end surface.

Additionally, the second avoidance surface may be located between and join the connecting surface and the first avoidance surface.

Additionally, the second avoidance surface may be curved so that, as a middle portion of the second avoidance surface of the connector body of each of the first and second conductors approaches the end surface of the connector body, the radial gap gradually enlarges.

Additionally, the first avoidance surface may be joined to the end surface.

Additionally, the connecting surface may be joined to the end surface.

Additionally, the first avoidance surface may be curved so as to be spaced from the connecting surface by a distance, which gradually decreases in a direction approaching the end surface.

The present invention also provides a stator winding including a number of conductors each provided thereon with the stator winding connector as defined above.

The present invention also provides an electric motor including the stator winding as defined above.

In summary, the present invention provides a stator winding connector including a connector body defining, on its opposite sides, a connecting surface and a first avoidance surface. The first avoidance surface is configured so that the connector body, when connected to a connector body of an adjacent conductor, does not protrude beyond an insulating layer on the adjacent conductor.

With this arrangement, adding the first avoidance surfaces on the side opposite to the connecting surfaces enables avoidance of interference, and an increased clearance, between the adjacent conductors in the conductor group, which allows the winding to satisfy a creepage distance requirement of an electric motor. Moreover, since the first avoidance surfaces enable avoidance of interference of each conductor with the insulating layer on the adjacent conductor, during bending and twisting of the conductors at the connecting end portions, any conductor will not come into contact with the insulating layer on the adjacent conductor, avoiding causing damage to the insulating layers. When such stator winding connectors are used on conductors in a winding, X-shaped crosses will be formed by connecting ends of adjacent conductors, circumventing the problem of excessively raised conductor end portions.

### BRIEF DESCRIPTION OF THE DRAWINGS

Fig. 1 schematically illustrates connections in a conventional stator winding.
Fig. 2 schematically illustrates connections in a stator winding according to the present invention.
Fig. 3 shows a schematic structural view of a stator winding connector according to a first embodiment of the present invention.
Fig. 4 is a schematic top view of Fig. 3.
Fig. 5 is a first schematic structural view of connections established in the stator winding in the first embodiment of the present invention.
Fig. 6 is a second schematic structural view of connections established in the stator winding in the first embodiment of the present invention.
Fig. 7 shows a schematic structural view of a stator winding connector according to a second embodiment of the present invention.
Fig. 8 is a schematic top view of Fig. 7.
Fig. 9 shows a schematic structural view of a stator winding connector according to a third embodiment of the present invention.
Fig. 10 shows a schematic structural view of a stator winding connector according to a fourth embodiment of the present invention.
Fig. 11 shows a schematic structural view of a stator winding connector according to a fifth embodiment of the present invention.

In these figures,
10 denotes a connector body; 11, a connecting surface; 12, a first avoidance surface; 13, a second avoidance surface; 14, an end surface; 15, a third avoidance surface; 16, a first side wall surface; 17, a first avoidance region; 18, a second avoidance region;
20, a first conductor group;
30, a second conductor group;
41, a first conductor; 42, a second conductor; and 421, an insulating layer.

### DETAILED DESCRIPTION

The stator winding connector proposed in present invention will be described in greater detail below with reference to the accompanying drawings, which illustrate specific embodiments thereof. From the following description, advantages and features of the present invention will become more apparent. Note that the figures are provided in a very simplified form not necessarily drawn to exact scale for the only purpose of helping to explain the disclosed embodiments in a more convenient and clearer way.

As used herein, the singular forms "a", "an" and "the" include plural referents. As used herein, the term "or" is generally employed in the sense of "and/or", "several" of "at least one" and "at least two" of "two or more". Additionally, the use of the terms "first", "second" and "third" herein is intended for illustration only and is not to be construed as denoting or implying relative importance or as implicitly indicating the numerical number of the referenced items. Accordingly, defining an item with "first", "second" or "third" is an explicit or implicit indication of the presence of one or at least two such items. As used herein, the terms "mounting", "coupling", "connecting", "disposing" and any variants thereof should be interpreted in a broad sense. When an element is referred to as being "disposed" on another element, this is generally intended to only mean that there is a connection, coupling, engagement or transmission relationship between the two elements, which may be either direct or indirect with one or more intervening elements, and should not be interpreted as indicating or implying a particular spatial position relationship between them. That is, the element may be located inside, outside, above, under, beside, or at any other location relative to the other element, unless the context clearly dictates otherwise. Those of ordinary skill in the art can understand the specific meanings of the above-mentioned terms herein, depending on their context. Furthermore, the directional terms such as "above", "below", "upper", "lower", "upward", "downward", "left", "right", and the like are used in relation to the illustrative embodiments as they are depicted in the figures, the upward or upper direction being toward the top of the corresponding figure and the downward or lower direction being toward the bottom of the corresponding figure.

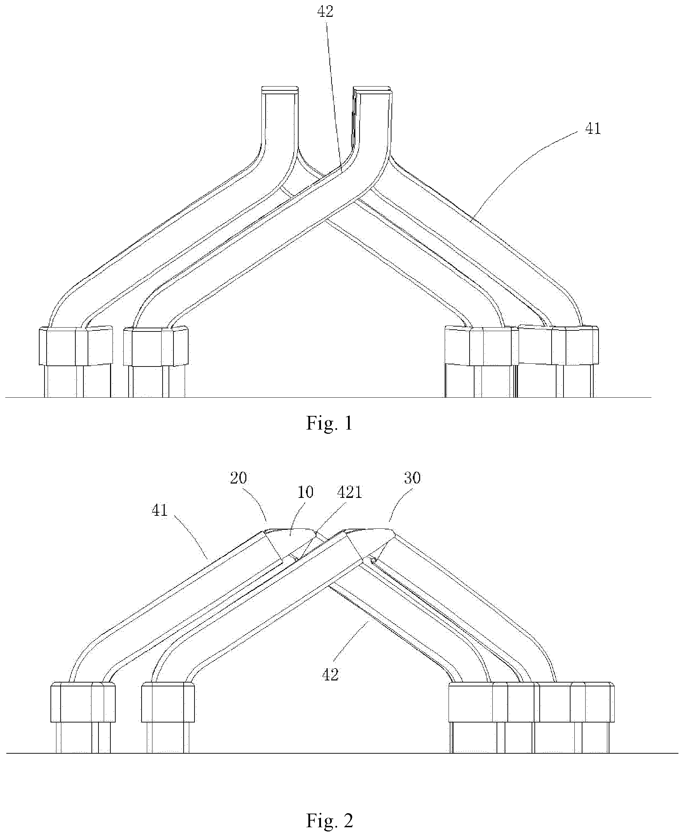

Referring to Fig. 1, in an existing I-pin winding, each conductor group includes a first conductor 41 and a second conductor 42. The first conductor 41 and the second conductor 42 each have a bent end portion. The first conductor 41 and the second conductor 42 can be inserted into a stator slot so that the end portions of them are oriented substantially in parallel to each other. The two end portions are then connected to each other by laser welding. This connection approach requires the connecting end portions to be bent for a second time and therefore suffers from multiple bending processes. Further, the resulting winding overhang tends to be excessively raised.

In view of this, as shown in Fig. 2, a new connection approach differing from the above approach has been proposed, in which end portions of first and second conductors in conductor groups are processed into bare connecting end portions, which can be connected without being bent so as to be substantially parallel to each other as shown in Fig. 1. This can not only save one bending process, but can also solve the problem of excessively raised conductor end portions. The approach of Fig. 2 only takes into account connecting surfaces of the connecting end portions of the first and second conductors in the conductor groups, and these connecting end portions cross to form substantially X-shaped structures. Thus, for example, in each of the first and second conductor groups 20, 30, one connecting end portion may protrude so that its free end goes beyond an insulating layer on the other conductor. On the one hand, this may lead to a too small clearance between the first and second conductor groups 20, 30, which may not able to meet a creepage distance requirement of an electric motor. On the other hand, this tends to cause damage to the insulating layers. For example, as shown in Fig. 2, in the first conductor group 20, the connecting end portion of the first conductor 41 may protrude so that its free end goes beyond the insulating layer 421 on the second conductor 42. This may lead to a too small clearance between the first and second conductor groups 20, 30. As a consequence, in a process to twist the end portions of the first and second conductor groups 20, 30 to bring their connecting surfaces into alignment, they tend to be excessively twisted, possibly leading to one of the connecting end portion coming into radial contact with, and causing damage to, the insulating layer on the other conductor.

The stator winding connector proposed herein overcomes the problem of an inadequate creepage distance between connected conductors in existing windings.

The stator winding connector is adapted to be provided on a conductor in a winding and includes a connector body 10 defining a connecting surface 11 and a first avoidance surface 12. The first avoidance surface 12 is positioned opposite the connecting surface 11. The first avoidance surface 12 is configured so that when a single conductor group including a first conductor 41 and a second conductor 42, both provided with such connectors, are mounted in a stator slot at relatively fixed positions, the connector body of any of the conductors does not protrude beyond an insulating layer on the other conductor.

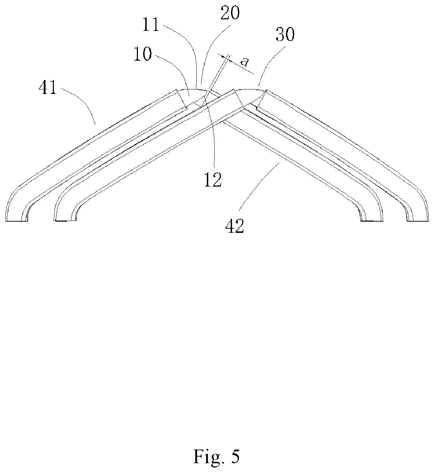

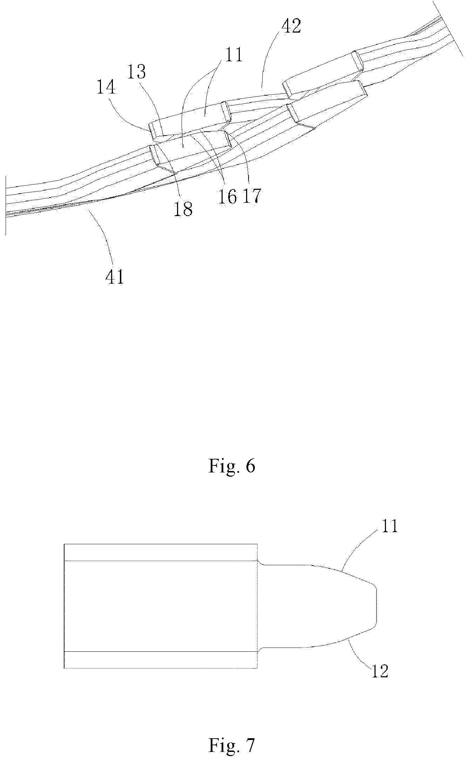

Here, the first and second conductors belong to a single conductor group. Referring to Fig. 2, the first and second conductors are of the same structure. Taking the second conductor 42 as an example, the second conductor 42 is a flat rod provided with an insulating layer 421 on its exterior. The insulating layer on an end portion of the second conductor 42 is stripped away, and the end portion is then processed into said connector 10. The second conductor 42 is inserted into the stator slot by passing its trailing end through the stator slot so that it protrudes outside from the other side of the stator slot. At the same time, the connector of the second conductor 42 is not inserted in the stator slot. The connector of the second conductor 42 is adapted to be connected to the connector of the first conductor 41 that belongs to the same conductor group as the second conductor 42. Referring to Figs. 5 and 6, the first conductor 41 and the second conductor 42 are inserted in the stator slot and fixed at the relative positions so that the connecting surfaces 11 of the first conductor 41 and the second conductor 42 are substantially coplanar. A laser welding process may be then carried out to form a weld layer, which covers both connecting surfaces and joins the two conductor end portions to each other.

The present invention is not limited to any particular shape of the connecting surface 11 and first avoidance surface 12. For example, they may be planar. In an alternative implementation, they may be curved. Each of the connecting surface and the first avoidance surface may either consist of a single flat surface, or be a complex composite surface consisting of multiple surfaces.

The first avoidance surface and the connecting surface are located on opposite sides. As avoidance structures, the first avoidance surfaces can avoid interference between the adjacent conductors so that, when the first conductor 41 and the second conductor 42 are mounted in the stator slot at the relatively fixed positions, the connector body of the first conductor 41 does not protrude beyond the insulating layer on the second conductor 42 and that the connector body of the second conductor 42 does not protrude beyond the insulating layer on the first conductor 41.

Referring to Fig. 5, the connector body of the first conductor 41 is spaced from the insulating layer on the second conductor 42 at a distance a, allowing an increased clearance to be formed between the first conductor group 20 and the second conductor group 30, which facilitates the satisfaction of a creepage distance requirement of an electric motor.

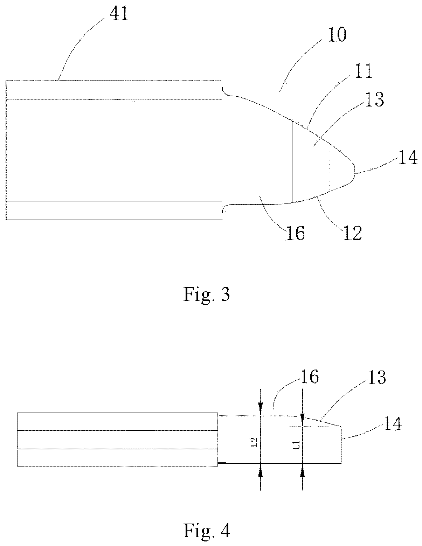

Referring to Fig. 3, the vertically opposite connecting surface 11 and first avoidance surface 12 may be asymmetrical and both curved. The connecting surface 11 may be more steeply sloped and hence have a greater length, ensuring a sufficient weld length. The first avoidance surface may have a gentler slope, which enables adequate avoidance while not adversely affecting the length of the connecting surface.

Referring to Fig. 7, in an alternative embodiment, the vertically opposite connecting surface 11 and the first avoidance surface 12 are symmetric, the connecting surface 11 and the first avoidance surface 12 are both curved, facilitating manufacturing.

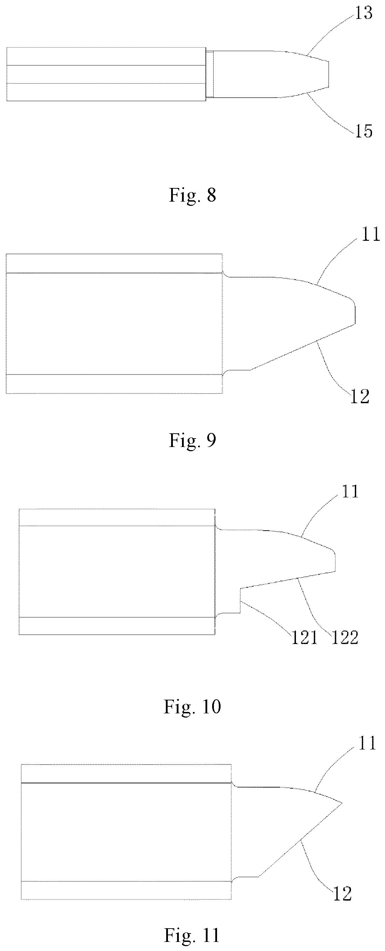

Referring to Fig. 9, in another alternative embodiment, the connecting surface 11 is curved, and the first avoidance surface 12 is a cut surface. In this case, the first avoidance surface 12 may be planar.

Referring to Fig. 10, in yet another alternative embodiment, the connecting surface 11 is curved, and the first avoidance surface 12 is a composite cut surface. Specifically, the first avoidance surface 12 may be a composite surface consisting of a first flat surface 121 and a second flat surface 122.

While not enumerated herein, many other forms are possible for the connecting surface and the first avoidance surface. The forms of these surfaces may be particularly adapted according to dimensions of the connector and an intended use condition of an electric motor employing the connector.

According to the present invention, adding the first avoidance surfaces on the side opposite to the connecting surfaces enables avoidance of interference, and an increased clearance, between the adjacent conductors in the conductor group, which allows the winding to satisfy a creepage distance requirement of an electric motor. Moreover, since the first avoidance surfaces enable avoidance of interference of each conductor with the insulating layer on the adjacent conductor, during bending and twisting of the conductors at the connecting end portions, any conductor will not come into contact with the insulating layer on the adjacent conductor, avoiding causing damage to the insulating layers.

Such connectors can be used to modify conductor connections in conductor groups from an I-pin to X-pin configuration, solving the problem of an excessively raised overhang of existing I-pin windings and simplifying electric motor assembly.

The connector body 10 may further have a first side wall surface 16 and a second avoidance surface 13, the second avoidance surface 13 is in the first side wall surface 16. The second avoidance surface 13 is configured in the way as described below.

When the first conductor 41 and the second conductor 42 are mounted in the stator slot at the relatively fixed positions, the first side wall surface of the connector body of the first conductor 41 radially opposes the first side wall surface of the connector body of the second conductor 42, and the second avoidance surfaces create radial gaps in a radial direction of the stator, which space the first side wall surface of the connector body of each conductor at the side of the connector closer to a free end thereof from the other conductor.

Here, the free end refers to an end of the connector body in a lengthwise direction of the conductor. Since the connector body is actually a depending structure defined by the conductor end portion, it is apparent that the free end is a depending end of the connector body.

Referring to Fig. 4, the second avoidance surface 13 may be formed by cutting away material at the first side wall surface 16. Due the presence of the second avoidance surface, a thickness L1 of the connector body 10 at the free end is smaller than a thickness L2 of the connector body 10 at its middle portion. With this arrangement, with combined reference to Fig. 6, both a first avoidance region 17 and a second avoidance region 18, i.e., the aforementioned radial gaps, are formed between the first side wall surface 16 of the connector body of the first conductor 41 and the first side wall surface 16 of the connector body of the second conductor 42. Accordingly, when the first conductor 41 and the second conductor 42 in the conductor group are inserted in the stator slot and fixed at the relative positions, due to the presence of the first avoidance region 17, the first side wall surface of the connector body of the first conductor 41 does not contact, at the side closer to the connector's free end, the end of the connector body of the second conductor 42 proximate the insulating layer thereon. Likewise, due to the presence of the second avoidance region 18, the first side wall surface of the connector body of the second conductor 42 does not contact, at the side closer to the connector's free end, the end of the connector body of the first conductor 41 proximate the insulating layer thereon. With this arrangement, contact of any of the connector bodies with the insulating layer on the adjacent conductor due to overly twisting or positioning or manufacturing tolerances can be avoided, facilitating the protection of the insulating layer against possible damage.

In the embodiment of Fig. 4, the side opposite to the second avoidance surface is not modified. As shown in Fig. 8, in an alternative embodiment, a third avoidance surface 15 may be formed on the side opposite to the second avoidance surface 13 by appropriate processing. The second avoidance surface 13 and the third avoidance surface 15 may be mirror-symmetric surfaces for avoiding interference with adjacent other conductors in corresponding directions.

By "the first conductor 41 and the second conductor 42 are mounted in the stator slot at the relatively fixed positions", it is intended to mean that the first conductor 41 and the second conductor 42 are mounted in the stator slot so that the connector bodies of the first conductor 41 and the second conductor 42 are located at the relatively fixed positions before they are connected to each other. This enables the two connector bodies to be desirably positioned as required by the subsequent connecting process. Generally, the first conductor 41 and the second conductor 42 are inserted in the stator slot, and the two connecting end portions are then twisted so as to be located at the relatively fixed positions, followed by joining the two connector bodies together by laser welding.

The present invention is not limited to any particular shape of the second avoidance surface. For example, it may be planar. In an alternative implementation, it may be curved. The second avoidance surface may either consist of a single flat surface, or be a complex composite surface consisting of multiple surfaces.

Additionally, the connector body 10 has an end surface 14, the end surface 14 is positioned at the free end of the connector body 10, the second avoidance surface 13 is joined to the end surface 14.

The second avoidance surface and the end surface may be joined by a curved transition. With combined reference to Fig. 4, the end surface 14 is actually at the depending end of the connector body 10, and the joining of the second avoidance surface 13 to the depending end of the connector body 10 means a maximized length of the avoidance region defined by the second avoidance surface 13 and adjacency of the avoidance region to the end surface. In this way, as shown in Fig. 6, after the first conductor 41 and the second conductor 42 in the conductor group are shaped at the relatively fixed positions, the end surface 14 of the connector body of the second conductor 42 is closest to the insulating layer on the first conductor 41, and due to the joining of the second avoidance surface 13 to the end surface, the second avoidance region 18 just opposes a portion of the connector body of the first conductor 41 proximate the insulating layer. This enables exact avoidance of interference of the connector body of the second conductor 42 with the insulating layer on the first conductor 41, as well as of the connector body of the first conductor 41 with the insulating layer on the second conductor 42, without removing too much material.

Further, the second avoidance surface 13 may be located between and join the connecting surface 11 and the first avoidance surface 12.

Referring to Fig. 5, when the first conductor 41 and the second conductor 42 in the conductor group are inserted into the stator slot and fixed at the relative positions, the connecting surface 11 is typically located on the side away from an iron core of the stator along an axis of the iron core. In this way, the connecting surface faces outwardly and can be easily welded. Taking the first conductor 41 as an example, in the orientation of Fig. 5, the connecting surface 11 of the connector body 10 faces substantially upwards, while the first avoidance surface 12 of the connector body 10 faces substantially downwards. Accordingly, in the orientation of Fig. 5, the first side wall surface 16 and the second avoidance surface 13 are located on the side of the connector body 10 of the first conductor 41 behind the drawing plane in the direction perpendicular to the paper plane. The second avoidance surface 13 joins the connecting surface 11 and the first avoidance surface 12 such as to define an avoidance region extending in the direction perpendicular to the paper plane along the first side wall surface 16 on the side of the connector body 10 behind the drawing plane as viewed in the orientation of Fig. 5. With combined reference to Fig. 5, the avoidance region defined by the second avoidance surface 13 has a great extent, which facilitates avoiding interference with the insulating layer on the second conductor 42 in the same conductor group and machining of the structure with the second avoidance surface 13 joining the connecting surface 11 and the first avoidance surface 12.

In addition, the second avoidance surface 13 is curved, the second avoidance surface 13 is further configured, in each of the first conductor 41 and the second conductor 42, the second avoidance surface 13 of the connector body may be curved in such a manner that the corresponding radial gap gradually enlarges as a middle portion of the second avoidance surface approaches the end surface of the connector body.

Referring to Fig. 4, a distance between the second avoidance surface 13 and the opposite surface may gradually vary from L2 to L1. Accordingly, with continued reference to Fig. 6, the joint of the second avoidance surface 13 and the end surface of the connector body of the second conductor 42 is spaced from the connector body of the first conductor 41 at a maximum radial distance. With this arrangement, even when middle portions of the two connector bodies radially come into contact with each other due to manufacturing or mounting tolerances, the curved shape of the second avoidance surface 13 can still ensure that the second conductor 42 is radially spaced apart, at the joint of the second avoidance surface and the end surface, from the connector body of the first conductor 41, effectively avoiding the insulating layer from being scratched and damaged.

Further, the first avoidance surface 12 may be joined to the same end surface 14.

In this way, the avoidance region defined by the first avoidance surface 12 can be lengthened as much as possible, and the provision of the first avoidance surface 12 does not adversely affect the connecting surface 11, ensuring a sufficiently long weld length of the connecting surface. Referring to Fig. 11, if the first avoidance surface 12 were formed by obliquely cutting the connecting surface 11, the connector body 10 would have a too short length, possibly leading to an insufficient weld length of the connecting surface 11.

Further, the connecting surface 11 may be joined to the end surface 14.

Referring to Fig. 3, joining the connecting surface 11 to the end surface 14 enables the connecting surface to have a great length and hence a sufficiently long weld length.

Further, the first avoidance surface 12 is curved, the first avoidance surface 12 is further configured that the first avoidance surface 12 is curved in such a manner that a distance between the first avoidance surface 12 and the connecting surface 11 gradually decreases in the direction approaching the end surface 14.

Referring to Fig. 5, when the two conductors in the conductor group are inserted into the stator slot and fixed at the relative positions, the curved shape of the first avoidance surface 12 better ensures that the connector body of each conductor in the conductor group does not protrude beyond the insulating layer on the other conductor.

Embodiments of the present invention further provide a stator winding including a number of conductors provided thereon with the stator winding connector as defined above.

Referring to Fig. 5, the connectors of the conductors are connected in pairs to form conductor groups, which function in the same way as those in a hairpin winding. The stator winding incorporating these conductors is an X-pin winding modified from an I-pin winding. The conductors are mounted in stator slots and their leading and trailing ends may be connected according to any suitable method known in the art, which is, however, not described in detail here, in order to avoid obscuring the present invention.

Embodiments of the present invention further provide an electric motor employing the stator winding as defined above.

The electric motor may include a stator assembly and a rotor assembly arranged on an inner side of the stator assembly. The X-pin stator winding that is modified from an I-pin winding may be included in the stator assembly of the electric motor. Thus, an adequate creepage distance can be created between conductors therein, and the conductors can be inserted into stator slots during assembly in an easy and fast way. Moreover, the electric motor is allowed to have a significantly reduced size, making it suitable for use in space-tight applications. Further, the electric motor provides remarkably improved power and torque densities and can be manufactured with simpler tooling at lower cost.

The embodiments disclosed herein are described in a progressive manner, with the description of each embodiment focusing on its differences from others. Cross-reference can be made between the embodiments for their common or similar features.

The description presented above is merely that of a few preferred embodiments of the present invention and does not limit the scope thereof in any sense. Any and all changes and modifications made by those of ordinary skill in the art based on the above teachings fall within the scope as defined in the appended claims.

## Claims

1. A stator winding connector adapted to be provided on a conductor in a winding, comprising a connector body, the connector body defining a connecting surface and a first avoidance surface, the first avoidance surface located on an opposite side of the connecting surface, the first avoidance surface configured so that, when a single conductor group comprising first and second conductors both provided with such connectors is mounted in a stator slot of a stator at relatively fixed positions, the connector body of any of the conductors does not protrude beyond an insulating layer on the other conductor.

2. The stator winding connector of claim **1,** wherein the connector body further defines a first side wall surface and a second avoidance surface, the second avoidance surface located in the first side wall surface, the second avoidance surface configured so that
when the first conductor and the second conductor are mounted in the stator slot at the relatively fixed positions, the first side wall surface of the connector body of the first conductor radially opposes the first side wall surface of the connector body of the second conductor and that the first side wall surface of the connector body of each of the conductors is spaced, on a side proximal to a free end of the connector body, from the other conductor by a radial gap in a radial direction of the stator.

3. The stator winding connector of claim 2, wherein the connector body further has an end surface, the end surface arranged at the free end of the connector body, wherein the second avoidance surface is joined to the end surface.

4. The stator winding connector of claim 2, wherein the second avoidance surface is located between and joins the connecting surface and the first avoidance surface.

5. The stator winding connector of claim 3, wherein the second avoidance surface is curved, the second avoidance surface is further configured so that, the second avoidance surface of the connector body is curved in such a manner that a corresponding radial gap gradually enlarges as a middle portion of the second avoidance surface of the connector body of each of the first and second conductors approaches the end surface of the connector body.

6. The stator winding connector of claim 3, wherein the first avoidance surface is joined to the end surface.

7. The stator winding connector of claim 6, wherein the connecting surface is joined to the end surface.

8. The stator winding connector of claim 3, wherein the first avoidance surface is curved, the first avoidance surface is further configured that the first avoidance surface is curved in such a manner that a distance between the first avoidance surface and the connecting surface gradually decreases in a direction approaching the end surface.

9. A stator winding, comprising a plurality of conductors each provided thereon with the stator winding connector of any one of claims 1 to 8.

10. An electric motor, comprising the stator winding of claim 9.
